# EUROPÄISCHE PATENTSCHRIFT

(11) **EP 3 635 799 B1**
(45) Veröffentlichungstag und Bekanntmachung des Hinweises auf die Patenterteilung: **30.03.2022**
(21) Anmeldenummer: 18729554.8
(22) Anmeldetag: 22.05.2018
(51) Int. Cl.: H01M 50/20, H01M 10/04

(54) **BESTÜCKUNGSVERFAHREN FÜR BATTERIEZELLEN UND MANIPULATIONSEINRICHTUNG HIERFÜR**
FITTING METHOD FOR BATTERY CELLS AND MANIPULATION DEVICE THEREFOR
PROCÉDÉ DE GARNISSAGE POUR CELLULES DE BATTERIE ET DISPOSITIF DE MANIPULATION POUR CE FAIRE

(30) Priorität: 08.06.2017 AT 504792017
(43) Veröffentlichungstag der Anmeldung: 15.04.2020
(73) Patentinhaber: AVL List GmbH, 8020 Graz (AT)
(72) Erfinder: VOLCK, Theo, 8077 Gössendorf (AT); FRITZ, Wolfgang, 8041 Graz (AT); HENNIGE, Volker, 8010 Graz (AT)
(74) Vertreter: Babeluk, Michael
(86) Internationale Anmeldenummer: PCT/AT2018/060101
(87) Internationale Veröffentlichungsnummer: WO 2018/223166

(56) Entgegenhaltungen:
- CN-U- 206 076 399
- DE-A1-102012 107 161
- DE-A1-102013 114 188
- DE-A1-102013 201 486
- DE-A1-102014 111 623

## Beschreibung

Die Erfindung betrifft ein Verfahren zum Bestücken eines Gehäuses eines Batteriemoduls mit einem Zellstapel an komprimierten Batteriezellen. Weiters betrifft die Erfindung eine Manipulationseinrichtung zur Durchführung dieses Verfahrens.

Viele heutige Lithium-Ionen-Zellen weisen beim Laden/Entladen, sowie durch Alterungseffekte über die Lebensdauer eine gewisse Volumenvergrößerung auf. Um eine möglichst gleichmäßige Vorspannung unter Berücksichtigung der Volumenänderung zu gewährleisten, ist es meist nicht ausreichend, die Batteriezellen ohne weitere Maßnahmen in einem Gehäuse zu verbauen. Dazu werden üblicherweise Ausgleichselemente, meist sogenannte Compression Pads, insbesondere elastische Elemente am Ende beziehungsweise zwischen den gestapelten Batteriezellen in einem Modul verbaut. Diese Elemente gewährleisten bei dementsprechender Auslegung ein Einhalten der Vorspannung auf die Batteriezellen innerhalb des spezifizierten Bereichs auch bei einer Volumenänderung der Batteriezellen. Als weitere Funktion der Ausgleichselemente ist die mechanische Fixierung der gestapelten Batteriezellen zu nennen. Um die Funktion über die gesamte Lebensdauer gewährleisten zu können, weisen die Ausgleichselemente oft einen Volumenbedarf auf, der einen negativen Einfluss auf die erreichbare Energiedichte des Batteriemodules hat, weil weniger nutzbarer Raum für den Einbau von Batteriezellen zur Verfügung steht.

Da diese Ausgleichselemente im unbelasteten Zustand die Außenabmessungen des Batteriezellenstapels vergrößern, passt dieser bei Batteriemodulkonzepten, welche eine Vorspannung der Zellen erfordern, unbelastet meist nicht in das Gehäuse. Somit muss die Packungsdichte des Zellstapels reduziert werden, um den Zellstapel im Gehäuse unterzubringen.

In der DE 10 2013 201 486 A1 ist ein Verfahren zum Herstellen einer Batteriezelle offenbart, bei dem eine zum Verpressen der Batteriezelle verwendete Presskraft überwacht und der Pressvorgang in Abhängigkeit von der Presskraft gestoppt wird.

Die DE 10 2014 111 623 A beschriebt ein Verfahren zum Stapeln von Batteriezellen mittels Förderbänder. Eine ähnliche Vorrichtung kann auch der CN 206 076 399 U entnommen werden.

Es ist bekannt, während der Montage eine Vorspannung im Zellstapel der Batteriezellen aufzubauen und den Zellstapel durch Gleitplatten in ein Gehäuse einzuführen, welches in Einführrichtung betrachtet ein geschlossenes Profil aufweist. Weiters ist es bekannt, ein geteiltes Gehäuse zu verwenden, wobei die Vorspannung durch Zusammenziehen der beiden Gehäuseteile erreicht wird. Das Zusammenziehen und Zusammenhalten der Gehäuseteile erfolgt mittels Spann- oder Zugbänder, Schrauben oder unlösbare Fügeverfahren, wie zum Beispiel Schweißen. Eine derartige Lösung mit Zugstange ist beispielsweise in der DE 10 2013 114 188 A1 beschrieben.

Diese Maßnahmen bedeuten meist einen Mehraufwand und/oder eine zusätzliche Belastung der Batteriezellen, wodurch eine Schädigung oder vorzeitige Alterung der Batteriezellen nicht auszuschließen ist.

Die DE 10 2012 107 161 A1 beschreibt ein Verfahren zur Herstellung einer Energiespeicherzelle, wobei eine Einbringungseinheit eine Elektrodenanordnung in ein Zellengehäuse einbringt, wofür eine Presseinheit vorgesehen ist, die die Elektrodenanordnung zusammenpresst, bevor diese in das Zellengehäuse eingeführt wird. Diese Presseinheit besteht aus zwei im Wesentlichen flächigen Grundkörpern, wobei entlang zweier Kulissenführungen Presselemente in Form von Walzen bewegbar sind. Aufgabe dieser Vorrichtung ist es, die in einer Batteriezelle zwischen den Elektroden- und Separatorenschichten befindliche Luft herauszudrücken, bevor die Elektrodenanordnung in ein Zellengehäuse eingebracht wird. Um eine Beschädigung der Elektrodenanordnung zu vermeiden, wird bei dieser Vorrichtung die Kompression bereits vor dem Einführen in das Zellengehäuse aufgehoben. Durch diese Aufhebung der Kompression ist diese Vorrichtung jedoch für das Bestücken eines Batteriegehäuses mit einer Vielzahl von in einem Zellstapel angeordneten Batteriezellen ungeeignet, weil dadurch die Gefahr einer Verlagerung der einzelnen Batteriezellen innerhalb des Zellstapels während des Einführens in das Batteriegehäuse besteht.

Aufgabe der Erfindung ist es die Nachteile des Stands der Technik zu vermeiden, sowie den Montageaufwand und die Belastung der Batteriezellen bei maximierter Packungsdichte zu vermindern.

Erfindungsgemäß erfolgt die Lösung dieser Aufgabe dadurch, dass ein Zellstapel an Batteriezellen in eine Manipulationseinrichtung zwischen zumindest zwei Gleitschienen oder Gruppen von Gleitschienen eingebracht wird, wobei an den äußersten Batteriezellen jeweils zumindest eine Gleitschiene oder eine Gruppe von Gleitschienen der Manipulationseinrichtung angreift und die Batteriezellen unter einer definierten Kompression hält, dass der Zellstapel an Batteriezellen durch die Manipulationseinrichtung normal zur Stapelrichtung in das Gehäuse eingeschoben und im Gehäuse appliziert wird, die Batteriezellen von den Gleitschienen freigegeben werden und die Gleitschienen wieder aus dem Gehäuse herausgezogen werden. Unter Freigegeben ist das Aufheben einer definierten Kompression zu verstehen, was ermöglicht, dass die Gleitschienen im Wesentlichen wieder ohne Krafteinwirkung auf den Zellstapel aus dem Gehäuse abgezogen werden können.

Eine vorteilhafte Ausführung der Erfindung sieht vor, dass die Batteriezellen nach Einbringen in die Manipulationseinrichtung durch die Gleitschienen komprimiert werden.

Der Zellstapel mit den elastischen Ausgleichselementen wird also mittels der Manipulationseinrichtung gegriffen und auf ein definiertes Maß zusammengedrückt. Der zusammengedrückte Zellstapel hat nun ein Außenmaß, welches in das Gehäuse des Batteriemoduls passt und im Wesentlichen ohne Krafteinwirkung auf den Zellstapel durch eine Fördereinrichtung eingeführt werden kann. Ist der Zellstapel vollständig eingeführt, wird dieser durch geringfügige Gegenbewegung der Gleitschienen entspannt und stützt sich an der Innenseite des Gehäuses ab.

Besonders vorteilhaft ist es, wenn die Innenwände des Gehäuses und/oder die Außenflächen der Ausgleichselemente entsprechende Freistellungen, beispielsweise Längsnuten, aufweisen, wodurch die Gleitschienen der Manipulationseinrichtung im Wesentlichen ohne Krafteinwirkung auf den Zellstapel abgezogen werden können.

Um eine automatische Bestückung zu ermöglichen, ist im Rahmen der Erfindung vorgesehen, dass die Manipulationseinrichtung zum Verfahren des Traggestells in der zweiten Richtung eine Fördereinrichtung aufweist, wobei vorzugsweise die Fördereinrichtung zumindest einen auf zumindest eine Gleitschiene einwirkenden Rollensatz aufweist.

Zur Durchführung des Verfahrens eignet sich eine Manipulationseinrichtung, welche zumindest eine erste Gleitschiene und zumindest eine zweite Gleitschiene aufweist, wobei die Längsachsen der ersten und zweiten Gleitschienen im Wesentlichen parallel zueinander angeordnet und in einer Richtung normal zu den Längsachsen voneinander beabstandet sind, wobei der Abstand der ersten und zweiten Gleitschiene im Wesentlichen der Höhe des Zellstapels an Batteriezellen entspricht, und dass die Manipulationseinrichtung in einer zweiten Richtung parallel zu einer Längsachse der Gleitschienen verfahrbar ist.

Um nach dem Applizieren des Zellstapels im Gehäuse die Gleitschienen im Wesentlichen ohne Krafteinwirkung auf den Zellstapel abziehen zu können, ist es vorteilhaft, wenn die erste und/oder zweite Gleitschiene in einer ersten Richtung normal zur Längsachse der Gleitschienen und normal zur zweiten Richtung verschiebbar ist.

Eine besonders einfache Handhabung des Zellstapels an Batteriezellen ist möglich, wenn zumindest zwei erste und/oder zweite Gleitschienen in einer Normalebene auf die erste Richtung gabelartig, vorzugsweise parallel nebeneinander angeordnet sind. Die Gleitschienen können somit - ähnlich den Hubgabeln eines Gabelhubstaplers - nach dem Applizieren des Zellstapels im Gehäuse zwischen Ausgleichselement und Gehäuse in einer Richtung parallel zur Längsachse der Gleitschienen herausgezogen werden.

Ein weiterer Vorteil, den das erfindungsgemäße Verfahren bietet, ist, dass die Packungsdichte des Zellstapels maximal ausgenutzt werden kann, und es somit möglich ist, beispielsweise ein sogenanntes Monoframegehäuse mit einer sehr hohen Packungsdichte an Zellstapel zu bestücken. Ein Monoframegehäuse kann sehr einfach und günstig produziert werden und hat überdies den Vorteil, dass das Monoframegehäuse außerordentlich stabil und sehr gut für Batteriezellen geeignet ist.

Die Erfindung wird im Folgenden anhand der in den Figuren dargestellten nicht einschränkenden Ausführungsbeispielen näher erläutert. Darin zeigen schematisch:
- Fig. 1: bis Fig. 4 eine erfindungsgemäße Manipulationseinrichtung in einer ersten Ausführungsvariante in Schrägansichten während verschiedener Phasen der Bestückung eines Batteriemoduls mit Batteriezellen;
- Fig. 5: bis Fig. 7 eine erfindungsgemäße Manipulationseinrichtung in einer zweiten Ausführungsvariante während verschiedener Phase der Bestückung eines Batteriemoduls mit Batteriezellen; und
- Fig. 8: das Batteriemodul und die Manipulationseinrichtung in einem Schnitt gemäß der Linie VIII - VIII.

Funktionsgleiche Teile sind in den Ausführungsvarianten mit gleichen Bezugszeichen versehen.

Die in den Fig. gezeigten Manipulationseinrichtungen 1 dienen zur Bestückung eines Gehäuses 11 eines Batteriemoduls 20 mit einem Zellstapel 12 an aufeinandergereihten Batteriezellen 13, wobei die Stapelrichtung mit dem Pfeil 14 angedeutet ist. An jedem Ende 12a, 12b des Zellstapel 12 ist ein Ausgleichselement 15 angeordnet.

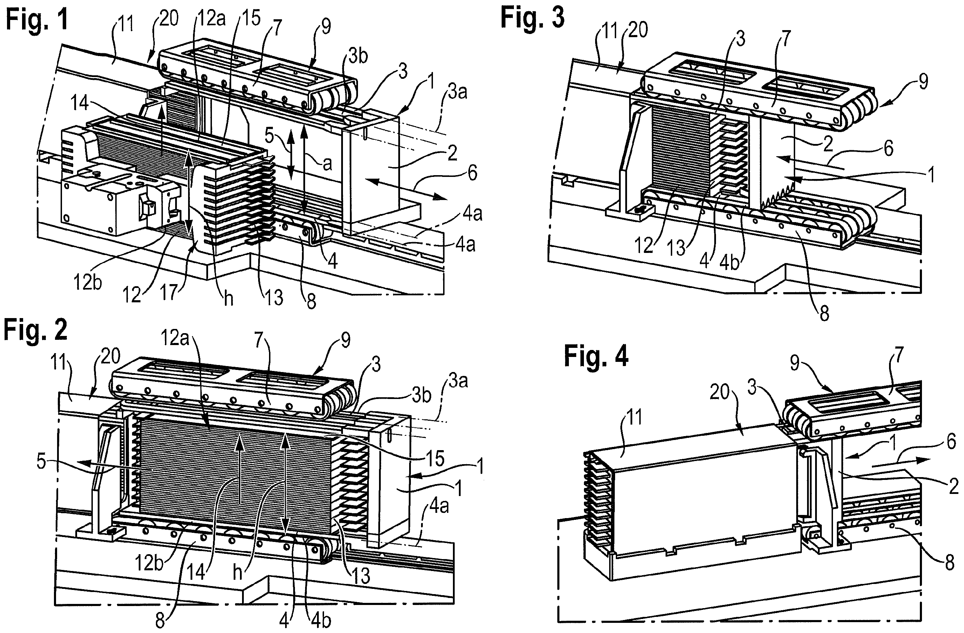

Die Fig. 1 bis 4 zeigen eine erste Ausführungsvariante einer Manipulationseinrichtung 1, welche ein Traggestell 2 aufweist, auf welchem erste Gleitschienen 3 und zweite Gleitschienen 4, im vorliegenden Fall Gruppen von drei ersten Gleitschienen 3 und drei zweiten Gleitschienen 4, angeordnet sind. Die ersten Gleitschienen 3 und die zweiten Gleitschienen 4 sind parallel zueinander in einem Abstand a angeordnet, welcher in einer normal zu den Längsachsen 3a, 4a der Gleitschienen 3, 4 ausgebildeten ersten Richtung 5 gemessen wird. Der Abstand a entspricht im Wesentlichen der Höhe h des Zellstapels 12 der Batteriezellen 13 des Batteriemoduls 20. Das Traggestell 2 und die von diesem normal abstehenden ersten Gleitschienen 3 und zweiten Gleitschienen 4 weisen - von der Seite quer zur zweiten Richtung 6 und der Stapelrichtung 14 betrachtet - die Form eines "C" beziehungsweise "U" auf.

Das in den Fig. 1 bis 4 dargestellte Traggestell 2 der Manipulationseinrichtung 1 ist samt den mit dem Traggestell 2 verbundenen Gleitschienen 3, 4 in einer zweiten Richtung 6 parallel zu den Längsachsen 3a, 4a der ersten Gleitschienen 3 und zweiten Gleitschienen 4 verfahrbar. Das Traggestell 2 und die Gleitschienen 3, 4 werden dabei über eine einen ersten Rollensatz 7 und einen zweiten Rollensatz 8 aufweisende Fördereinrichtung 9 in der zweiten Richtung 5 angetrieben, wobei der erste Rollensatz 7 an der Außenseite 3b der ersten Gleitschienen 3 und der zweite Rollensatz 8 an der Außenseite 4b der zweiten Gleitschienen 4 angreift.

Bei der in Fig. 1 gezeigten Zustellphase wird der Zellstapel 12 an Batteriezellen 13 durch eine Greifeinrichtung 17 der Manipulationseinrichtung 1 - quer zur zweiten Richtung 6 und quer zur Stapelrichtung 14 - zugeführt. Zum leichteren Einfädeln zwischen den ersten 3 und zweiten Gleitschienen 4 kann der Zellstapel 12 durch die Greifeinrichtung 17 in Stapelrichtung 14 etwas zusammengedrückt werden.

Fig. 2 zeigt eine erste Phase der Bestückung, bei der der Zellstapel 12 an Batteriezellen 13 vollständig zwischen den Gleitschienen 3, 4 angeordnet und durch diese aufgenommen ist.

Fig. 3 zeigt eine zweite Phase des Bestückungsvorgangs, bei der das Traggestell 2 und die Gleitschienen 3 und 4 zusammen mit dem Zellstapel 12 an Batteriezellen 13 durch die Fördereinrichtung 9 in der zweiten Richtung 6 zum Gehäuse 11 des Batteriemoduls 20 hin verschoben wird. Sind die Gleitschienen 3, 4 elastisch ausgeführt, so können diese während des Verschiebevorganges eventuell geringfügig zueinander gebogen werden, um ein Einfädeln und Einfahren des Zellstapels 12 in das Gehäuse 11 zu erleichtern.

Fig. 4 zeigt eine dritte Phase des Bestückungsvorganges. Der Zellstapel 12 an Batteriezellen 13 ist nun im Gehäuse 11 appliziert, das Traggestell 2 mit den Gleitschienen 3, 4 kann nun in der zweiten Richtung 6 aus dem Gehäuse 10 herausgezogen werden.

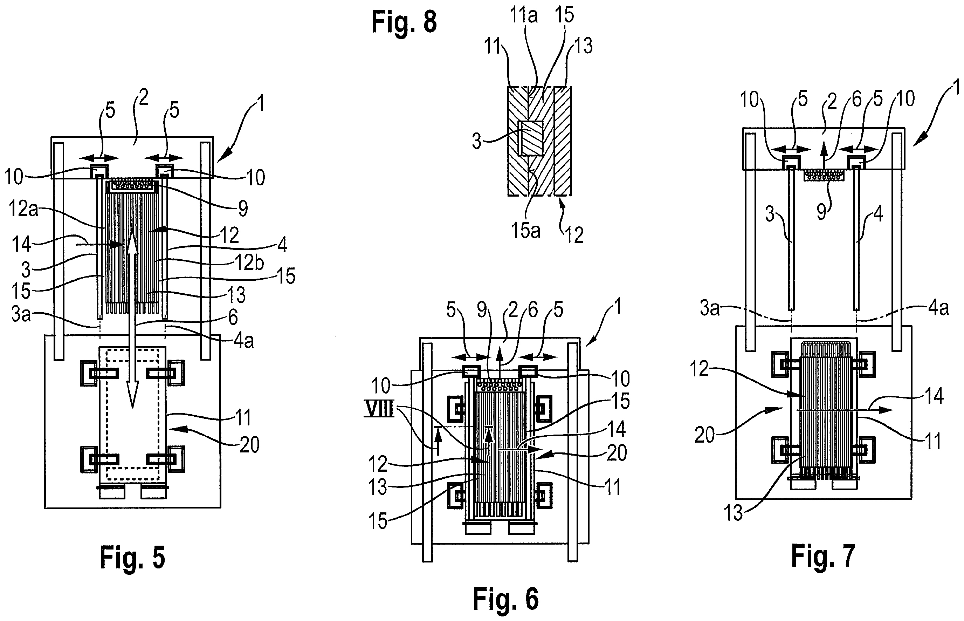

Die Fig. 5 bis 7 zeigen eine zweite Ausführung einer erfindungsgemäßen Manipulationseinrichtung 1, welche sich von der in den Fig. 1 bis 4 dargestellten ersten Variante dadurch unterscheidet, dass am Traggestell 2 eine Kompressionseinrichtung 10 zum Verschieben der Gleitschienen 3, 4 in der ersten Richtung 5 und/oder zum Aufbringen einer Kompressionskraft auf die Batteriezellen 13 während des Bestückungsvorganges vorgesehen ist. Die erste Richtung 5 ist parallel zur Stapelrichtung 14 und normal zu den Längsachsen 3a, 4a, der Gleitschienen 3, 4 und normal zur zweiten Richtung 6 ausgebildet.

Fig. 5 zeigt den Batteriemodul 20 und die Manipulationseinrichtung 1 während einer ersten Phase der Bestückung mit den Batteriezellen 13, wobei der der Zellstapel 12 an Batteriezellen 13 zwischen den Gleitschienen 3, 4 angeordnet und durch diese aufgenommen ist. Die Gleitschienen 3, 4 werden durch die Kompressionseinrichtung 10 gegen die Ausgleichselemente 15 an den beiden Enden 12a, 12b des Zellstapels 12 gedrückt, wodurch die Batteriezellen 13 komprimiert werden. Danach wird das Traggestell 2 samt dem durch die Gleitschienen 3, 4 gehaltenen und komprimierten Zellstapel 12 in der zweiten Richtung 6 in das Gehäuse 11 des Batteriemoduls 20 geschoben.

Fig. 6 zeigt eine Phase des Bestückungsvorgangs, bei der der Stapel 12 an Batteriezellen 13 vollständig innerhalb des Gehäuses 11 des Batteriemoduls 20 positioniert ist. Die Kompressionseinrichtung 10 wird deaktiviert, wodurch die Gleitschienen 3, 4 kraftfrei werden und sich in der ersten Richtung 5 beziehungsweise der Stapelrichtung 14 etwas vom Zellstapel 12 wegbewegen, beziehungsweise von diesem abheben. Durch die Elastizität der Ausgleichselemente 15 und der Batteriezellen 13 dehnt sich der Zellstapel 12 in der Stapelrichtung 14 auf sein Arbeitsvolumen aus und stützt sich über die Ausgleichselemente 15 an der Innenwand 11a des Gehäuses 11 ab, wie in Fig. 8 gezeigt ist. Vorteilhaft ist es dabei, wenn die Ausgleichselemente 15 und/oder die Innenwand 11a des Gehäuses 11 mit beispielsweise nutförmigen Freistellungen 18 versehen sind, in welchen die Gleitschienen 3, 4 geführt sind. Die Querschnitte der Freistellungen 18 sind dabei etwas größer ausgebildet, als die entsprechenden Querschnitte der Gleitschienen 3, 4, um ein friktionsarmes Herausziehen der Gleitschienen 3, 4 zwischen Gehäuse 11 und Zellstapel 12 zu ermöglichen. Fig. 7 zeigt die Manipulationseinrichtung 1 in ihrer Ausgangstellung, wobei die Gleitschienen 3, 4 vollständig aus dem Gehäuse 11 des Batteriemoduls 20 in der zweiten Richtung 6 herausgezogen sind.

## Patentansprüche

1. Verfahren zum Bestücken eines Gehäuses (11) eines Batteriemoduls (20) mit einem Zellstapel (12) an komprimierten Batteriezellen (13), **dadurch gekennzeichnet, dass** der Zellstapel (12) an Batteriezellen (13) in eine Manipulationseinrichtung (1) zwischen zumindest zwei Gleitschienen (3, 4) oder Gruppen von Gleitschienen (3, 4) eingebracht wird, wobei an den äußersten Batteriezellen (13) jeweils zumindest eine Gleitschiene (3, 4) oder eine Gruppe von Gleitschienen (3, 4) der Manipulationseinrichtung (1) angreift und die Batteriezellen (13) unter einer definierten Kompression hält, dass der Zellstapel (12) an Batteriezellen (13) durch die Manipulationseinrichtung (1) normal zur Stapelrichtung (14) des Zellstapels (12) in das Gehäuse (11) eingeschoben und im Gehäuse (11) appliziert wird, die Batteriezellen (13) von den Gleitschienen (3, 4) freigegeben werden und die Gleitschienen (3, 4) wieder aus dem Gehäuse (11) herausgezogen werden.

2. Verfahren nach Anspruch 1, **dadurch gekennzeichnet, dass** die Batteriezellen (13) nach Einbringen in die Manipulationseinrichtung (1) zwischen den Gleitschienen (3, 4) durch die Manipulationseinrichtung (1) komprimiert werden.

3. Manipulationseinrichtung (1) zur Durchführung des Verfahren nach Anspruch 1 oder 2, **dadurch gekennzeichnet, dass** die Manipulationseinrichtung (1) ein Traggestell (2) mit zumindest einer ersten Gleitschiene (3) und zumindest einer zweiten Gleitschiene (4) aufweist, wobei die Längsachsen (3a) der ersten (3) und zweiten Gleitschienen (4) im Wesentlichen parallel zueinander angeordnet und in einer ersten Richtung (5) normal zu den Längsachsen (3a, 4a) der Gleitschienen (3, 4) voneinander beabstandet auf dem Traggestell (2) angeordnet sind, wobei der Abstand (a) der ersten Gleitschiene (3) und zweiten Gleitschiene (4) im Wesentlichen der Höhe (h) des Zellstapels (12) an Batteriezellen (13) entspricht, und dass das Traggestell (2) samt den Gleitschienen (3, 4) in einer zweiten Richtung (6) parallel zu einer Längsachse (3a, 4a) der Gleitschienen (3, 4) verfahrbar ist, wobei die erste (3) und/oder zweite Gleitschiene (4) in der ersten Richtung (5) normal zu den Längsachsen (3a, 4a) der Gleitschienen (3, 4) und normal zur zweiten Richtung (6) verschiebbar und/oder mit einer Kraft beaufschlagbar ist.

4. Manipulationseinrichtung (1) nach Anspruch 3, **dadurch gekennzeichnet, dass** zumindest zwei erste Gleitschienen (3) in einer Normalebene auf die erste Richtung (5) gabelartig, vorzugsweise parallel nebeneinander angeordnet sind.

5. Manipulationseinrichtung (1) nach Anspruch 3 oder 4, **dadurch gekennzeichnet, dass** zumindest zwei zweite Gleitschienen (4) in einer Normalebene auf die erste Richtung (5) gabelartig, vorzugsweise parallel nebeneinander angeordnet sind.

6. Manipulationseinrichtung (1) nach einem der Ansprüche 3 bis 5, **dadurch gekennzeichnet, dass** die Manipulationseinrichtung (1) zum Verfahren des Traggestells (2) in der zweiten Richtung (6) eine Fördereinrichtung (9) aufweist, wobei vorzugsweise die Fördereinrichtung (9) zumindest einen auf zumindest eine Gleitschiene (3, 4) einwirkenden Rollensatz (7, 8) aufweist.

7. Manipulationseinrichtung (1) nach einem der Ansprüche 3 bis 6, **dadurch gekennzeichnet, dass** die Innenwände (11a) des Gehäuses (11) und/oder die Außenflächen (12a) der Ausgleichselemente (12) entsprechende Freistellungen (18), beispielsweise Längsnuten, aufweisen.

## Claims

1. Method for fitting a housing (11) of a battery module (20) with a cell stack (12) of compressed battery cells (13), **characterised in that** the cell stack (12) of battery cells (13) is introduced into a manipulation device (1) between at least two sliding rails (3, 4) or groups of sliding rails (3, 4), wherein at least one sliding rail (3, 4) or a group of sliding rails (3, 4) of the manipulation device (1) acts in each case on the outermost battery cells (13) and keeps the battery cells (13) under a defined compression, **in that** the cell stack (12) of battery cells (13) is pushed into the housing (11) by the manipulation device (1) perpendicularly to the stacking direction (14) of the cell stack (12) and applied in the housing (11), the battery cells (13) are released from the sliding rails (3, 4) and the sliding rails (3, 4) are pulled out of the housing (11) again.

2. Method according to claim 1, **characterised in that** the battery cells (13) are compressed between the sliding rails (3, 4) by the manipulation device (1) after being introduced into the manipulation device (1).

3. Manipulation device (1) for carrying out the method according to claim 1 or 2, **characterised in that** the manipulation device (1) comprises a support frame (2) having at least one first sliding rail (3) and at least one second sliding rail (4), wherein the longitudinal axes (3a) of the first (3) and second sliding rails (4) are arranged substantially parallel to each other and are arranged spaced apart from each other on the support frame (2) in a first direction (5) perpendicularly to the longitudinal axes (3a, 4a) of the sliding rails (3, 4), wherein the distance (a) of the first sliding rail (3) and second sliding rail (4) essentially corresponds to the height (h) of the cell stack (12) of battery cells (13), and **in that** the support frame (2) together with the sliding rails (3, 4) is arranged in a second direction (6) parallel to a longitudinal axis (3a, 4a) of the sliding rails (3, 4), wherein the first (3) and/or second sliding rail (4) can be displaced in the first direction (5) perpendicularly to the longitudinal axes (3a, 4a) of the sliding rails (3, 4) and perpendicularly to the second direction (6) and/or can be subjected to a force.

4. Manipulation device (1) according to claim 3, **characterised in that** at least two first sliding rails (3) are arranged in a normal plane to the first direction (5) in a fork-like manner, preferably parallel next to each other.

5. Manipulation device (1) according to claim 3 or 4, **characterised in that** at least two second sliding rails (4) are arranged in a normal plane to the first direction (5) in a fork-like manner, preferably parallel next to each other.

6. Manipulation device (1) according to one of claims 3 to 5, **characterised in that** the manipulation device (1) has a conveying device (9) for moving the support frame (2) in the second direction (6), wherein preferably the conveying device (9) comprises at least one set of rollers (7, 8) acting on at least one sliding rail (3, 4).

7. Manipulation device (1) according to one of claims 3 to 6, **characterised in that** the inner walls (11a) of the housing (11) and/or the outer surfaces (12a) of the compensating elements (12) have corresponding clearances (18), for example longitudinal grooves.

## Revendications

1. Procédé de garnissage d'un boîtier (11) d'un module de batterie (20) avec une pile (12) d'éléments de batterie, comprimés (13),
procédé **caractérisé en ce que**
la pile (12) d'éléments de batterie (13) est mise dans une installation de manipulation (1) entre au moins deux rails de guidage (3, 4) ou groupes de rails de guidage (3, 4),
* un rail de guidage (3, 4) ou un groupe de rails de guidage (3, 4) de l'installation de manipulation (1) étant appliqué contre les éléments de batterie (13) les plus à l'extérieur,
- la pile (12) d'éléments de batterie (13) est introduite par l'installation de manipulation (1) perpendiculairement à l'orientation (14) de la pile d'éléments (12) dans le boîtier (11) et elle est appliquée dans le boîtier (11), et
- les éléments de batterie (13) sont dégagés des rails (3, 4) et les rails de guidage (3, 4) alors extraits du boîtier (11).

2. Procédé selon la revendication 1,
**caractérisé en ce que**
après introduction dans l'installation de manipulation (1), les éléments de batterie (13) sont comprimés par l'installation de manipulation (1) entre les rails de guidage (3, 4).

3. Installation de manipulation (1) pour la mise en œuvre du procédé selon la revendication 1 ou 2,
**caractérisée en ce que**
- l'installation de manipulation (1) comporte un châssis de support (2) avec au moins un premier rail de guidage (3) et au moins un second rail de guidage (4),
* les axes longitudinaux (3a) du premier rail de guidage (3) et du second rail de guidage (4) sont pratiquement parallèles l'un à l'autre et sont montés écartés l'un de l'autre sur le châssis de support (2) dans une première direction (5) perpendiculaire à l'axe longitudinal (3a, 4a) des rails de guidage (3, 4),
*l'écart (a) entre le premier rail de guidage (3) et le second rail de guidage (4) correspond pratiquement à la hauteur (h) de la pile (12) d'éléments de batterie (13), et
- le châssis de support (2) avec les rails de guidage (3, 4) est mobile dans une seconde direction (6) parallèle à l'axe longitudinal (3a, 4a) des rails de guidage (3, 4),
* le premier (3) et/ou le second rail de guidage (4) sont coulissants et/ou sollicités par une force dans une première direction perpendiculaire à l'axe longitudinal (3a, 4a) des rails de guidage (3, 4) et perpendiculaire à la seconde direction (6).

4. Installation de manipulation (1) selon la revendication 3, **caractérisée en ce que**
au moins deux premiers rails de guidage (3) sont prévus l'un à côté de l'autre selon un montage en fourche, de préférence parallèles dans un plan normal à la première direction (5).

5. Installation de manipulation (1) selon la revendication 3 ou 4, **caractérisée en ce que**
au moins deux seconds rails de guidage (4) sont prévus l'un à côté de l'autre selon un montage en fourche, de préférence parallèle, dans un plan normal à la première direction (5).

6. Installation de manipulation (1) selon l'une des revendications 3 à 5, **caractérisée en ce que**
l'installation de manipulation (1) comporte une installation de transfert (9) pour déplacer le châssis de support (2) dans la seconde direction (6), * l'installation de transfert (9) comporte, de préférence au moins un jeu de galets (7, 8) coopérant avec un rail de guidage (3, 4).

7. Installation de manipulation (1) selon l'une des revendications 3 à 6, **caractérisée en ce que**
les parois intérieures (11a) du boîtier (11) et/ou les surfaces extérieures (12a) des éléments de compensation (12) comportent des positions de libération (18) correspondantes, par exemple, des rainures longitudinales.
